# EUROPÄISCHE PATENTSCHRIFT

(11) **EP 2 086 795 B1**
(45) Veröffentlichungstag und Bekanntmachung des Hinweises auf die Patenterteilung: **14.02.2018**
(21) Anmeldenummer: 08759261.4
(22) Anmeldetag: 17.06.2008
(51) Int. Cl.: B60R 13/00

(54) **EMBLEM MIT FARBIGEN UND SILBERGLÄNZENDEN FLÄCHEN**
EMBLEM HAVING COLORED AND SILVERY SURFACES
EMBLÈME À SURFACES DE COULEUR ET ARGENTÉES

(30) Priorität: 30.08.2007 DE 102007041347
(43) Veröffentlichungstag der Anmeldung: 12.08.2009
(73) Patentinhaber: Linden GmbH, 58515 Lüdenscheid (DE)
(72) Erfinder: KASTRUP, Michael, 33719 Bielefeld (DE); TRAMBEREND, Jörg, 58791 Wedohl (DE)
(74) Vertreter: Cohausz, Helge B.
(86) Internationale Anmeldenummer: PCT/EP2008/004859
(87) Internationale Veröffentlichungsnummer: WO 2009/030294

(56) Entgegenhaltungen:
- EP-A- 1 314 612
- WO-A-2005/002831
- DE-A1- 10 118 178
- DE-U1- 29 721 627
- US-A- 6 003 895

## Beschreibung

Die Erfindung betrifft ein Emblem, insbesondere für ein Kraftfahrzeug, mit farbigen und silberglänzenden Flächen, die zur Außenseite hin durch eine klare, transparente Kunststoffschicht abgedeckt sind und ein Verfahren zum Herstellen eines solchen Emblems.

Es sind Embleme für Kraftfahrzeuge bekannt, die in der Weise hergestellt werden, dass eine ebene Aluminiumfolie mit einem Farblack bedruckt wird, wobei der Farblack Stellen offen lässt, durch die das polierte Aluminium silberglänzend hindurch scheint. Danach wird die bedruckte Aluminiumfolie geprägt und vorderseitig mit einem Kunststoff-Klarlack und rückseitig mit einer plattenförmigen Kunststoffschicht als Tragschicht bzw. Sockel versehen. Bei diesen bekannten Emblemen hat es sich gezeigt, dass die Schichten sich voneinander lösen, wenn aufgrund einer mechanischen Einwirkung auf die Vorderseite, insbesondere durch Steinschlag, ein Loch in der Vorderseite entsteht oder die umlaufende Schnittkante undicht wird, so dass Feuchtigkeit eindringen kann. Hierzu ist der bekannte Emblemaufbau besonders gefährdet, da das Emblem eine geringe Elastizität aufweist und damit mechanische Einwirkungen zu wenig auffangen bzw. einwirkende Energien zu wenig abbauen kann.

Aus der gattungsbildenden EP 1 314 612 B1 ist ein Dekorelement für Kraftfahrzeuge bekannt, mit einer äußeren transparenten Kunststoffschicht, auf deren Rückseite zwei Farbflächen aufgedruckt sind. In die Rückseite sind durch einen Laser Nuten eingebracht, die die zwei Farbflächen vollständig und die transparente Kunststoffschicht teilweise durchdringen, um einen 3-D-Effekt zu erreichen.

Aufgabe der Erfindung ist es, ein Emblem der eingangs genannten Art so zu verbessern, dass bei einfacher Konstruktion und Herstellung eine Delaminierung sicher verhindert wird.

Diese Aufgabe wird erfindungsgemäß durch ein Emblem mit den Merkmalen des Anspruchs 1 gelöst. Ein auf diese Weise aufgebautes Emblem ohne Aluminiumschicht und damit nur aus Kunststoff bestehend, kann von vorne einwirkende Energien hoher Stärke, wie dies zum Beispiel bei Steinschlag erfolgt, sicher vernichten, ohne dass es zu einem Bruch kommt. Hierbei ist ein solches elastisches, bruchfestes Emblem, das nur aus Kunststoff besteht, konstruktiv einfach, wobei der Aufbau in umgekehrter Reihenfolge erfolgt als beim Stand der Technik. Während bei den bisher bekannten Emblemen auf die Vorderseite einer tragenden Aluminiumfolie Schichten aufgebracht wurden, werden bei der erfindungsgemäßen Lösung auf die Rückseite einer tragfähigen, elastischen, klaren und transparenten Kunststoffschicht die Farbschichten in der Weise aufgebracht, dass in der ersten Farbschicht Lücken in Form freier Flächen bestehen, die von der zweiten Farbschicht ausgefüllt werden. Dies führt zu einer besonders einfachen Herstellung bei hoher Sicherheit gegen eine Delaminierung.

Als vorteilhaft wird auch angesehen, dass auf der Rückseite der mit farbigen und/oder silberglänzenden Flächen versehenen klaren, transparenten Kunststoffschicht eine plattenförmige Kunststoffschicht als Tragschicht insbesondere als Sockel aufgebracht ist. Durch ein solches Kunststoffstrukturbauteil erfolgt eine rückseitige Unterstützung. Dieses Strukturbauteil ist derart ausgeführt, dass eine maximale Energieaufnahme ermöglicht wird und die Befestigung an der Karosserie des Fahrzeugs ermöglicht.

Vorteilhafte Ausgestaltungen der Erfindung sind in den Unteransprüchen aufgeführt. Hierbei wird noch vorgeschlagen, dass die Vorderseite der klaren, transparenten Kunststoffschicht mit einer elastischen, transparenten Kunststoff-Klarschicht bedeckt ist, um die Widerstandsfähigkeit und die Energievernichtbarkeit noch zu erhöhen.

Zum Lösen der erfindungsgemäßen Aufgabe und zum Erreichen der Vorteile wird ein Verfahren zum Herstellen eines Emblems der eingangs genannten Art vorgeschlagen, mit folgenden Verfahrensschritten:
- Auf die Rückseite der klaren, transparenten Kunststoffschicht wird eine erste Farbschicht aufgebracht, insbesondere aufgedruckt oder aufgesprüht, die Flächen frei lässt,
- auf die erste Farbschicht wird eine silberglänzende Farbschicht, insbesondere ein Chromlack, aufgebracht, der die frei gelassenen Flächen ausfüllt und
- nach Bedarf wird zur Versiegelung des Chromlackes und zur Haftung des auf der Rückseite befindlichen Sockels eine Mittelschicht aufgebracht,
- danach wird auf die Rückseite eine plattenförmige Kunststoffschicht als Tragschicht, insbesondere als Sockel, aufgebracht, insbesondere aufgespritzt. Hierbei ist von Vorteil, wenn die klare, transparente Kunststoffschicht in einer Form gespritzt und geprägt wird. Auch wird vorzugsweise vorgeschlagen, dass auf die Vorderseite der klaren, transparenten Kunststoffschicht eine elastische Kunststoff-Klarschicht aufgebracht insbesondere auflackiert wird.

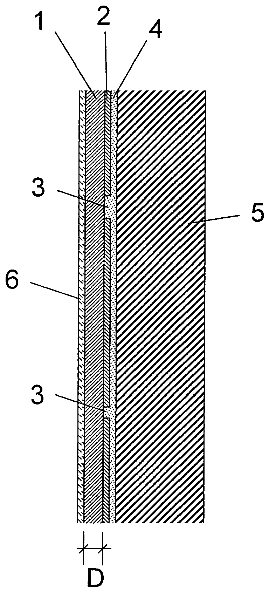

Ein Ausführungsbeispiel der Erfindung ist in der Zeichnung in einem Querschnitt ausschnittsweise im vergrößerten Maßstab dargestellt und wird im Folgenden näher beschrieben.

Das Emblem weist eine Kunststoffschicht 1 aus einem klaren, transparenten, elastischen Kunststoff auf, der eine solche Dicke besitzt, dass er tragfähig ist. Diese Kunststoffschicht 1 weist eine Dicke D von 0,3 bis 0,6 mm, insbesondere von 0,4 bis 0,5 mm auf. Als Kunststoffmaterial werden Polycarbonat (PC), Polymethylmethacrylat (Acrylglas) oder thermoplastisches Silikonelastomer vorgeschlagen, dabei liegt die Bruchdehnung (Elastizität) dieser Kunststoffschicht 1 in einem Bereich von mindestens 5%.

Der Kunststoff dieser Kunststoffschicht 1 wird vorzugsweise in einer Form durch Spritzgießen hergestellt, wobei gleichzeitig die Kunststoffschicht 1 geprägt wird. Durch ein solches Prägen können je nach vorgegebenen Bedingungen bestimmte Flächen hervorgehoben und geringste Materialdicken mit guten optischen Eigenschaften hergestellt werden.

Auf die Kunststoffschicht 1 wird rückseitig eine erste Farbschicht 2 aufgebracht, insbesondere aufgedruckt oder aufgesprüht / aufgespritzt, wobei diese erste Farbschicht vorzugsweise Lücken bildet, in dem sie Flächen 3 frei lässt. Danach wird auf die Rückseite der ersten Farbschicht 2 eine zweite silberglänzende Farbschicht 4 aufgedruckt oder aufgesprüht. Hierzu wird vorzugsweise ein Chromlack verwendet. Diese Farbschicht 4 gelangt auch in die Lücken bzw. frei gebliebenen Flächen 3, so dass an diesen Stellen die hierdurch entstehenden silberglänzenden Flächen von außen sichtbar sind.

Auf die Rückseite der Farbschicht 4 wird eine plattenförmige Kunststoffschicht 5 aufgebracht, insbesondere aufgespritzt oder aufgegossen, die als Tragschicht und zur Energieabsorption insbesondere als Sockel wirkt und der Befestigung des Emblems dient.

Auf die Vorderseite der Kunststoffschicht 1 kann noch eine elastische, transparente Kunststoff-Klarschicht 6 aufgebracht werden, die die Kratzfestigkeit der Kunststoffschicht 1 und die Energieabsorbierung noch erhöht.

Ferner können zwischen den Farbschichten 2, 4 und der Kunststoffschichten 1, 5 Haftvermittler verwendet werden, um die Haftung zu erhöhen.

## Patentansprüche

1. Emblem, insbesondere für ein Kraftfahrzeug, mit farbigen und silberglänzenden Flächen, die zur Außenseite hin durch eine klare, transparente Kunststoffschicht (1) abgedeckt sind, wobei
- die klare, transparente Kunststoffschicht (1) aus einem tragfähigen, elastischen Kunststoff besteht, der rückseitig die farbigen und silberglänzenden Flächen (2, 4) trägt, und
- die klare, transparente Kunststoffschicht (1) rückseitig mit einer ersten Farbschicht (2) versehen ist, die auf der Rückseite der klaren, transparenten Kunststoffschicht (1) Flächen (3) frei lässt,
**dadurch gekennzeichnet,**
- **dass** auf die erste Farbschicht eine zweite Farbschicht (4), insbesondere ein Chromlack, aufgebracht ist, die/der die silberglänzenden Flächen an den freien Stellen bildet.

2. Emblem nach Anspruch 1, **dadurch gekennzeichnet, dass** die klare, transparente Kunststoffschicht (1) Prägungen aufweist.

3. Emblem nach einem der vorherigen Ansprüche, **dadurch gekennzeichnet, dass** die klare, transparente Kunststoffschicht (1) aus Polycarbonat, Polymethylmethacrylat, oder einem thermoplastischen Silikonelastomer besteht.

4. Emblem nach einem der vorherigen Ansprüche, **dadurch gekennzeichnet, dass** die klare, transparente Kunststoffschicht (1) eine Dicke von 0,3 - 0,6 mm, insbesondere von 0,4 - 0,5 mm, aufweist.

5. Emblem nach einem der vorherigen Ansprüche, **dadurch gekennzeichnet, dass** die Bruchdehnung der klaren, transparenten Kunststoffschicht (1) in einem Bereich von mindestens 5% liegt.

6. Emblem nach einem der vorherigen Ansprüche, **dadurch gekennzeichnet, dass** die farbigen und silberglänzenden Flächen (2, 4) auf die klare, transparente Kunststoffschicht rückseitig aufgedruckt oder aufgesprüht sind.

7. Emblem nach einem der vorherigen Ansprüche, **dadurch gekennzeichnet, dass** auf der Rückseite der mit farbigen und/oder silberglänzenden Flächen (2, 4) versehenen klaren, transparenten Kunststoffschicht (1) eine plattenförmige Kunststoffschicht (5) als Tragschicht, insbesondere als Sockel, aufgebracht ist.

8. Emblem nach einem der vorherigen Ansprüche, **dadurch gekennzeichnet, dass** die Vorderseite der klaren, transparenten Kunststoffschicht (1) mit einer elastischen, transparenten Kunststoff-Klarschicht (6) bedeckt ist.

9. Emblem nach einem der vorherigen Ansprüche, **dadurch gekennzeichnet, dass** die farbigen und/oder silberglänzenden Flächen (2, 4) über einen Haftvermittler mit der klaren, transparenten Kunststoffschicht (1) und der Chromlack mit der Tragschicht verbunden sind.

10. Emblem nach einem der vorherigen Ansprüche, **dadurch gekennzeichnet, dass** es frei von einer Aluminiumschicht oder -folie ist.

11. Verfahren zum Herstellen eines Emblems, insbesondere für ein Kraftfahrzeug, mit farbigen und silberglänzenden Flächen, die zur Außenseite hin durch eine klare, transparente Kunststoffschicht (1) abgedeckt sind, wobei
• auf die Rückseite der klaren, transparenten Kunststoffschicht eine erste Farbschicht (2) aufgebracht, insbesondere aufgedruckt oder aufgesprüht, wird, die Flächen frei lässt,
• und danach auf die erste Farbschicht (2) eine silberglänzende Farbschicht (4), insbesondere ein Chromlack, aufgebracht wird, der die frei gelassenen Flächen (3) ausfüllt,
**dadurch gekennzeichnet,**
• **dass** danach auf die Rückseite eine plattenförmige Kunststoffschicht (5) als Tragschicht, insbesondere als Sockel, aufgebracht, insbesondere aufgespritzt, wird.

12. Verfahren nach Anspruch 11, **dadurch gekennzeichnet, dass** die klare, transparente Kunststoffschicht (1) in einer Form spritzgeprägt wird.

13. Verfahren nach Anspruch 11 oder 12, **dadurch gekennzeichnet, dass** auf die Vorderseite der klaren, transparenten Kunststoffschicht (1) eine elastische Kunststoff-Klarschicht (6) aufgebracht, insbesondere aufgespritzt, wird.

## Claims

1. Emblem, in particular for a motor vehicle, with coloured and silver-lustre areas covered towards the external side by a clear, transparent plastics layer (1), where
- the clear, transparent plastics layer (1) consists of a resilient plastic which is capable of providing support and which, on a reverse side, bears the coloured and silver-lustre areas (2, 4), and
- the clear, transparent plastics layer (1) has, on a reverse side, a first colour layer (2), which leaves areas (3) uncovered on the reverse side of the clear, transparent plastics layer (1),
**characterized in that**
- applied to the first colour layer there is a second colour layer (4), in particular a chrome lacquer, and this second colour layer/this chrome lacquer forms the silver-lustre areas on the uncovered locations.

2. Emblem according to Claim 1, **characterized in that** the clear, transparent plastics layer (1) has embossments.

3. Emblem according to any of the preceding claims, **characterized in that** the clear, transparent plastics layer (1) consists of polycarbonate, polymethyl methacrylate, or a thermoplastic silicone elastomer.

4. Emblem according to any of the preceding claims, **characterized in that** the thickness of the clear, transparent plastics layer (1) is from 0.3 to 0.6 mm, in particular from 0.4 to 0.5 mm.

5. Emblem according to any of the preceding claims, **characterized in that** the tensile strain at break of the clear, transparent plastics layer (1) is at least 5%.

6. Emblem according to any of the preceding claims, **characterized in that** the coloured and silver-lustre areas (2, 4) have been applied by reverse-side printing or spraying to the clear, transparent plastics layer.

7. Emblem according to any of the preceding claims, **characterized in that** on the reverse side of the clear, transparent plastics layer (1) having coloured and/or silver-lustre areas (2, 4) a laminar plastics layer (5) has been applied as supportive layer, in particular as base.

8. Emblem according to any of the preceding claims, **characterized in that** a resilient, transparent plastics layer (6) covers the frontal side of the clear, transparent plastics layer (1).

9. Emblem according to any of the preceding claims, **characterized in that** there is bonding of the coloured and/or silver-lustre areas (2, 4) by way of an adhesion promoter to the clear, transparent plastics layer (1) and of the chrome lacquer to the supportive layer.

10. Emblem according to any of the preceding claims, **characterized in that** it is free from any aluminium layer or aluminium foil.

11. Process for the production of an emblem, in particular for a motor vehicle, with coloured and silver-lustre areas covered towards the external side by a clear, transparent plastics layer (1), where
• a first colour layer (2) is applied, in particular by printing or by spraying, to the reverse side of the clear, transparent plastics layer, and leaves areas uncovered,
• and then a silver-lustre colour layer (4), in particular a chrome lacquer, is applied to the first colour layer (2), and fills the areas (3) left uncovered,
**characterized in that**
• a laminar plastics layer (5) is applied as supportive layer, in particular as base, to the reverse side, in particular via a nozzle.

12. Process according to Claim 11, **characterized in that** the clear, transparent plastics layer (1) is injection-compression moulded in a mould.

13. Process according to Claim 11 or 12, **characterized in that** a resilient clear plastics layer (6) is applied to the frontal side of the clear, transparent plastics layer (1), in particular via a nozzle.

## Revendications

1. Emblème, en particulier pour un véhicule automobile, présentant des surfaces colorées et argentées brillantes, qui sont recouvertes vers le côté extérieur par une couche (1) en matériau synthétique, transparente, claire,
- la couche (1) en matériau synthétique, transparente, claire, étant constituée par un matériau synthétique élastique, pouvant servir de support, qui porte les surfaces (2, 4) colorées et argentées brillantes sur la face arrière et
- la couche (1) en matériau synthétique, transparente, claire étant pourvue sur la face arrière d'une première couche colorée (2) qui laisse libre, sur la face arrière de la couche (1) en matériau synthétique, transparente, claire, des surfaces (3) **caractérisé en ce**
- **qu'**une deuxième couche colorée (4), en particulier une laque chromée, est appliquée sur la première couche colorée qui forme les surfaces argentées brillantes au niveau des endroits libres.

2. Emblème selon la revendication 1, **caractérisé en ce que** la couche (1) en matériau synthétique, transparente, claire, présente un gaufrage.

3. Emblème selon l'une quelconque des revendications précédentes, **caractérisé en ce que** la couche (1) en matériau synthétique, transparente, claire est constituée par du polycarbonate, du poly(méthacrylate de méthyle) ou un élastomère thermoplastique à base de silicone.

4. Emblème selon l'une quelconque des revendications précédentes, **caractérisé en ce que** la couche (1) en matériau synthétique, transparente, claire présente une épaisseur de 0,3-0,6 mm, en particulier de 0,4-0,5 mm.

5. Emblème selon l'une quelconque des revendications précédentes, **caractérisé en ce que** l'allongement à la rupture de la couche (1) en matériau synthétique, transparente, claire, se situe dans une plage d'au moins 5%.

6. Emblème selon l'une quelconque des revendications précédentes, **caractérisé en ce que** les surfaces (2, 4) colorées et argentées brillantes sont imprimées ou pulvérisées sur la face arrière de la couche en matériau synthétique, transparente, claire.

7. Emblème selon l'une quelconque des revendications précédentes, **caractérisé en ce qu'**une couche (5) en matériau synthétique en forme de plaque est appliquée sous forme de couche support, en particulier sous forme de socle, sur la face arrière de la couche (1) en matériau synthétique, transparente, claire pourvue des surfaces (2, 4) colorées et/ou argentées brillantes.

8. Emblème selon l'une quelconque des revendications précédentes, **caractérisé en ce que** la face avant de la couche (1) en matériau synthétique, transparente, claire est revêtue d'une couche claire (6) en matériau synthétique, transparente, élastique.

9. Emblème selon l'une quelconque des revendications précédentes, **caractérisé en ce que** les couches (2, 4) colorées et/ou argentées brillantes sont assemblées via un promoteur d'adhérence à la couche (1) en matériau synthétique, transparente, claire et la laque chromée à la couche support.

10. Emblème selon l'une quelconque des revendications précédentes, **caractérisé en ce qu'**il est exempt d'une couche ou d'une feuille d'aluminium.

11. Procédé pour la fabrication d'un emblème, en particulier pour un véhicule automobile, présentant des surfaces colorées et argentées brillantes, qui sont recouvertes du côté extérieur par une couche (1) en matériau synthétique, transparente, claire, une première couche colorée (2) étant appliquée,
- en particulier imprimée ou pulvérisée, sur la face arrière de la couche en matériau synthétique, transparente, claire, qui laisse des surfaces libres
- et une couche colorée (4) argentée brillante, en particulier une laque chromée, étant ensuite appliquée sur la première couche colorée (2), qui remplit les surfaces (3) laissées libres, **caractérisé en ce**
- **qu'**une couche (5) en matériau synthétique, en forme de plaque, est ensuite appliquée, en particulier projetée, sur la face arrière en tant que couche support, en particulier en tant que socle.

12. Procédé selon la revendication 11, **caractérisé en ce que** la couche (1) en matériau synthétique, transparente, claire, est gaufrée par injection dans un moule.

13. Procédé selon la revendication 11 ou 12, **caractérisé en ce qu'**une couche claire (6) en matériau synthétique, élastique est appliquée, en particulier projetée, sur la face avant de la couche (1) en matériau synthétique, transparente, claire.
